# FASCICULE DE BREVET EUROPEEN

(11) **EP 0 350 381 B1**
(45) Date de publication et mention de la délivrance du brevet: **31.08.1994**
(21) Numéro de dépôt: 89401900.9
(22) Date de dépôt: 03.07.1989
(51) Int. Cl.: F16J 3/04, E06B 3/66

(54) **Garniture d'étanchéité pour l'espace entre deux panneaux transparents, parallèles, indépendants**
Dichtung für den Zwischenraum von zwei transparenten, parallelen, unabhängigen Platten
Sealing for the space between two transparent, parallel, independent panels

(30) Priorité: 04.07.1988 FR 8809018
(43) Date de publication de la demande: 10.01.1990
(73) Titulaire: DÄTWYLER FRANCE, F-02420 Bellicourt (FR)
(72) Inventeur: Aubert, Charles, F-92210 Saint Cloud (FR)
(74) Mandataire: Laget, Jean-Loup

(56) Documents cités:
- DE-U- 8 318 252
- FR-A- 2 115 068
- FR-A- 2 412 238
- FR-A- 2 525 314
- FR-A- 2 555 647
- US-A- 1 484 141
- US-A- 2 909 814

## Description

L'invention concerne une garniture d'étanchéité pour l'espace entre deux panneaux transparents parallèles indépendants telle que connue, par exemple, du document FR-A-2 555 647.

Dans les immeubles de grande hauteur, on utilise de plus en plus souvent une ossature en béton qui porte en façade un mur rideau en aluminium par exemple. Dans cette structure, le jour extérieur est reçu à travers deux panneaux transparents parallèles, l'un disposé dans le mur rideau, l'autre dans l'ossature en béton et aligné sur la face intérieure de cette ossature. Ces deux panneaux sont disposés en regard l'un de l'autre et sont séparés par un espace d'une quinzaine de centimètres environ. Ces deux panneaux sont mis en place l'un par rapport à l'autre avec une tolérance d'environ 20 mm dans les trois dimensions, c'est-à-dire en hauteur, en largeur et en profondeur.

Le problème technique qui se pose est le suivant : il faut isoler de façon étanche l'espace entre ces deux panneaux transparents quelle que soit leur position relative dans les limites de tolérance.

Le document US-A-2.909.814 décrit une garniture d'étanchéité se présentant sous forme de cadre ayant sensiblement les dimensions des panneaux de verre, et une largeur sensiblement égale à la distance entre les deux panneaux, les deux bords de la garniture étant fixés respectivement sur l'un et l'autre des panneaux. Dans ce document, les panneaux ont un écartement fixe et la garniture est en acier inoxydable.

Le but de l'invention est de proposer une garniture d'étanchéité en forme de cadre, qui soit fixée d'une part sur le contour de l'un des panneaux, d'autre part sur le contour de l'autre panneau, et qui soit susceptible de se déformer pour absorber les jeux de montage dans les trois dimensions.

L'invention a pour objet une garniture d'étanchéité en matériau élastomère tel que caoutchouc ou thermoplastique pour assurer l'isolation de l'espace entre deux panneaux transparents parallèles indépendants, se présentant sous la forme d'un cadre ayant sensiblement les dimensions des panneaux et une largeur sensiblement égale à la distance entre les deux panneaux, les deux bords de la garniture étant fixés respectivement sur l'un et l'autre des panneaux, caractérisée en ce que le cadre est constitué de brins de profilé extrudé, et d'angles moulés, chaque angle étant réalisé par injection du matériau élastomère dans un moule pour assurer la continuité par vulcanisation avec les deux brins de profilé, cette continuité s'effectuant avec interposition d'au moins un soufflet transversal à un ou plusieurs plis, de manière à assurer la reprise des jeux de montage dans les trois dimensions : hauteur, largeur et profondeur.

Selon d'autres caractéristiques de l'invention :
- les côtés du cadre ont un profil transversal à section en plis ;
- les angles du cadre présentent le même profil transversal à section en plis que les brins de profilé extrudé des côtés du cadre ;
- les angles du cadre sont arrondis ;
- au droit des soufflets transversaux, les pieds de fixation de la garniture sont munis de fentes transversales pour autoriser un jeu longitudinal ;
- lorsque les panneaux sont de mêmes dimensions, la garniture est en forme de prisme ;
- lorsque l'un des panneaux est plus petit que l'autre, la garniture est en forme de tronc de pyramide ;
- la garniture comporte au moins un pied de fixation destiné à être inséré dans une gorge correspondante disposée sur la face extérieure du panneau intérieur et un pied de fixation destiné à être inséré latéralement dans une gorge solidaire du panneau extérieur ;
- le profil transversal du profilé extrudé présente des ondulations régulièrement réparties entre les deux bords de la garniture fixés chacun sur un panneau.

L'invention a également pour objet une garniture d'étanchéité en matériau thermoplastique pour assurer l'isolation de l'espace entre deux panneaux transparents parallèles indépendants, se présentant sous la forme d'un cadre ayant sensiblement les dimensions des panneaux et une largeur sensiblement égale à la distance entre les deux panneaux, les deux bords de la garniture étant fixés respectivement sur l'un et l'autre des panneaux, caractérisée en ce que le cadre est constitué de brins de profilé extrudé et d'angles moulés, chaque angle étant un angle moulé équipé de soufflets transversaux et étant collé à deux brins de profilé extrudé constituant les profilés du cadre.

D'autres caractéristiques ressortent de la description qui suit faite avec référence au dessin annexé sur lequel on peut voir :
Figure 1 : une vue en coupe dans un plan horizontal d'une structure d'immeuble adaptée à recevoir la garniture d'étanchéité selon l'invention;
Figure 2 : une vue de face de la garniture d'étanchéité selon l'invention, limitée au voisinage d'un angle;
Figure 3 : une coupe selon la figure I-I de la figure 2;
Figure 4 : une vue partielle de dessus de la figure 2;
Figure 5 : une vue en perspective d'un angle de la garniture d'étanchéité selon l'invention .

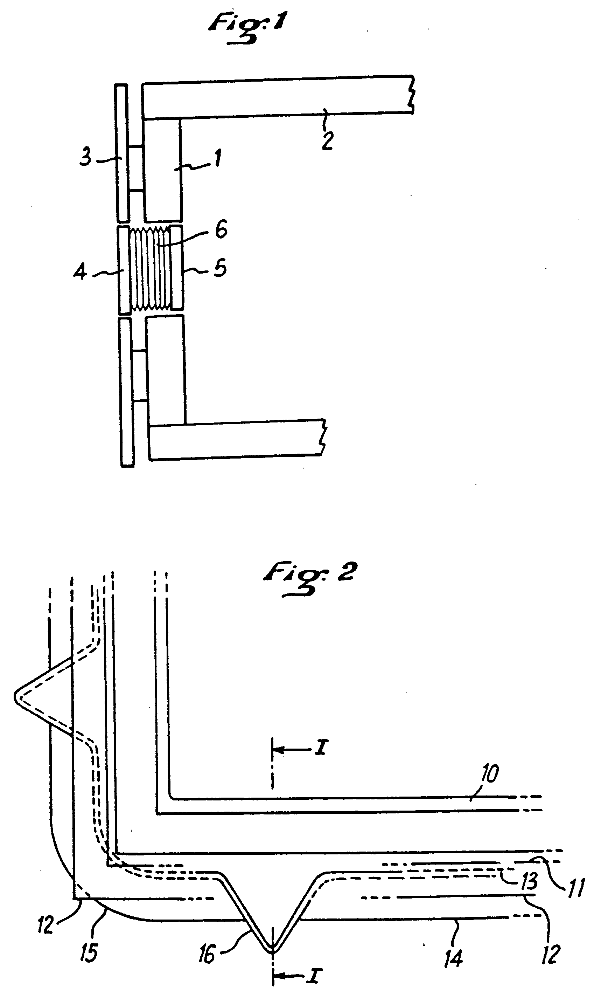

En se reportant à la figure 1, on voit une structure d'immeuble comportant une ossature 1, 2 en béton, qui porte en façade un mur rideau 3 en aluminium par exemple. Dans le mur rideau est disposé un premier panneau transparent 4, et dans l'ossature en béton un deuxième panneau transparent 5, afin de donner du jour à l'intérieur. Ces deux panneaux ont des dimensions soumises à des tolérances qui sont usuellement de 20̸ mm en hauteur et en largeur. Ces deux panneaux sont parallèles entre eux, mais ils sont indépendants l'un de l'autre, et leur distance relative est elle aussi soumise à une tolérance de l'ordre de 20̸ mm.

Pour assurer un jour de qualité, il faut éviter, dans l'espace entre les deux panneaux 4 et 5, la poussière et la vapeur d'eau. On doit donc disposer entre les deux panneaux une garniture d'étanchéité symbolisée en 6, et d'une largeur variable, mais qui correspond à la distance entre les deux panneaux.

Selon l'invention, cette garniture d'étanchéité se présente sous la forme d'un cadre, ayant sensiblement les dimensions des panneaux, constitué de brins en profilé extrudé et d'angles moulés. Chaque angle est relié à deux brins, par vulcanisation, avec interposition d'un soufflet transversal à un ou plusieurs plis. Le profil transversal du cadre est à section en plis avec des ondulations pour lui donner de la souplesse.

Lorsque les deux panneaux ont sensiblement les mêmes dimensions, le cadre a une forme générale de prisme droit. Lorsque l'un des panneaux, en général le panneau intérieur, est plus petit que l'autre, le cadre a une forme générale de tronc de pyramide.

Le garniture d'étanchéité selon l'invention est réalisée de préférence en caoutchouc, ou matériau thermostatique.

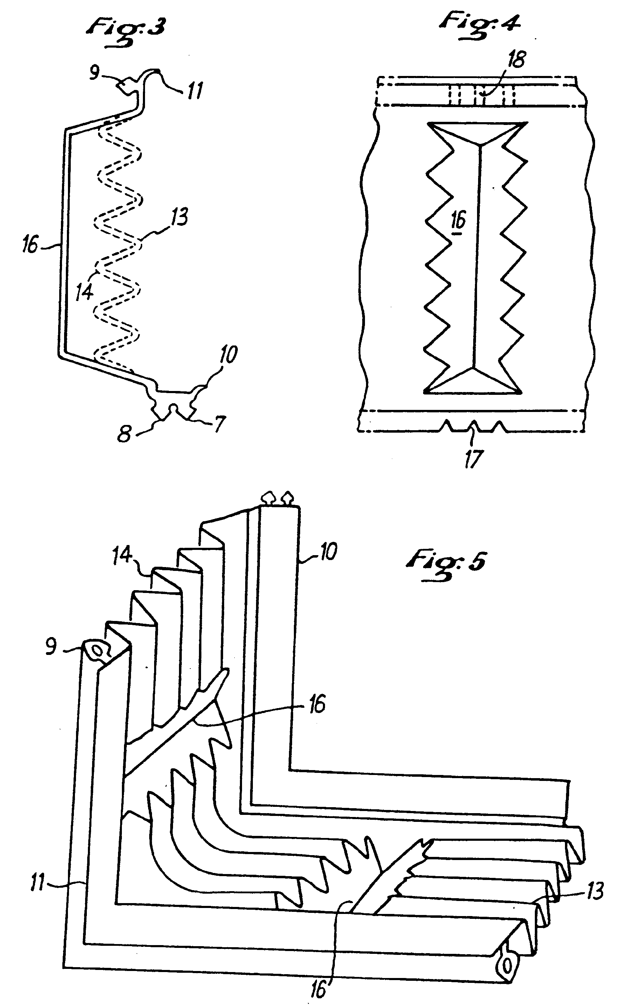

Sur les figures 2 et 3, on a représenté la garniture 6 d'étanchéité selon l'invention dans l'hypothèse où elle est fixée d'une part par deux pieds, pas toujours nécessaires, de fixation 7, 8 destinés à être insérés dans deux gorges de la menuiserie métallique disposées sur la face extérieure du panneau intérieur, d'autre part par un pied 9 destiné à être inséré dans une gorge de la menuiserie métallique du panneau extérieur, mais latéralement par rapport à la face intérieure du panneau extérieur.

A côté de pieds 7 et 9, la garniture se termine par une lèvre 10̸ et 11 respectivement.

L'arête 12 du pied 9 est visible sur la figure 2. Le profil transversal du profilé extrudé, constituant la majeure partie des côtés du cadre, est à section en plis et présente des ondulations s'étendant entre leur sommet 13, intérieur à l'espace délimité par les panneaux 4, 5 et la garniture 6, et leur sommet 14 extérieur. Ces ondulations sont régulièrement réparties entre les deux bords de la garniture fixés chacun sur un panneau.

Les angles du cadre, qui sont moulés, ont le même profil transversal que les brins de profilé extrudé des côtés du cadre. Cependant, pour faciliter leur déformation , les angles sont arrondis comme indiqué en 15. Seuls les bords de la garniture et les pieds de fixation restent droits pour assurer leur fixation dans les gorges de la menuiserie métallique.

Au voisinage des angles, sont disposés des soufflets transversaux. Sur les figures 2 et 3, on n'a représenté qu'un soufflet 16 par côté du cadre, mais il peut y en avoir plusieurs. Pour des facilités de représentation, ce soufflet a été représenté en forme de dièdre, mais il peut être plus ou moins arrondi, sa qualité essentielle étant d'être déformable pour permettre la reprise des jeux de montage dans les trois dimensions, hauteur, largeur et profondeur.

Le soufflet 16 a été représenté avec son arête vers l'extérieur de la garniture, mais il pourrait tout aussi bien être inversé, avec son arête vers l'intérieur de l'espace délimité par les deux panneaux et la garniture. De même, l'arête du soufflet 16 a été représentée perpendiculaire au sens des plis du profilé extrudé constituant le côté du cadre, il s'agit là d'une facilité de représentation et non d'un impératif absolu.

Pour raccorder un brin du profilé extrudé constituant un côté du cadre, et un angle moulé, avec interposition d'un soufflet transversal, on procède par vulcanisation. On obtient ainsi un cadre d'une seule pièce prêt à être mis en place.

Selon une variante de réalisation, au lieu d'être entièrement fait en usine, le cadre est assemblé sur chantier. Les angles moulés, équipés des soufflets transversaux, sont collés aux brins du profilé extrudé constituant les côtés du cadre. Cette variante de réalisation est plutôt adaptée au cas des matériaux thermoplastiques.

La figure 4 représente une vue de dessus de la garniture selon l'invention, au niveau du soufflet 16. Le soufflet y est représenté dans un contour polygonal représentant son intersection avec les ondulations du profilé extrudé et de l'angle moulé. Pour donner de la souplesse par allongement au bord de la garniture, au droit du soufflet 16, on pratique quelques fentes telles que 17, dans les pieds de fixation 7 et 8, ou 18 dans le pied de fixation 9.

La figure 5 représente une vue en perspective d'un angle du cadre de la garniture selon l'invention.

Selon l'invention, la garniture d'étanchéité entre deux panneaux parallèles indépendants est constituée :
- de brins de profilé extrudé à profil transversal à section en plis,
- d'angles moulés à coins arrondis,
- de soufflets transversaux disposés entre les brins et les angles,
- ces différents éléments étant assemblés pour former un cadre continu,
- cet assemblage étant réalisé soit par vulcanisation, soit par collage.

Au droit des soufflets, les pieds de fixation de la garniture d'étanchéité sont munis de fentes transversales pour permettre un jeu longitudinal.

De cette manière, la garniture assure la reprise des jeux de montage dans les trois dimensions.

## Revendications

1. Garniture d'étanchéité en matériau élastomère tel que caoutchouc ou thermoplastique pour assurer l'isolation de l'espace entre deux panneaux (4, 5) transparents parallèles indépendants, se présentant sous la forme d'un cadre ayant sensiblement les dimensions des panneaux (4, 5) et une largeur sensiblement égale à la distance entre les deux panneaux, les deux bords de la garniture (6) étant fixés respectivement sur l'un et l'autre des panneaux (4, 5), caractérisée en ce que le cadre est constitué de brins de profilé extrudé, et d'angles moulés, chaque angle étant réalisé par injection du matériau élastomère dans un moule pour assurer la continuité par vulcanisation avec les deux brins de profilé, cette continuité s'effectuant avec interposition d'au moins un soufflet transversal (16) à un ou plusieurs plis, de manière à assurer la reprise des jeux de montage dans les trois dimensions : hauteur, largeur et profondeur.

2. Garniture selon la revendication 1, caractérisée en ce que les côtés du cadre ont un profil transversal à section en plis.

3. Garniture selon la revendication 2, caractérisée en ce que les angles du cadre présentent le même profil transversal à section en plis que les brins de profilé extrudé des côtés du cadre.

4. Garniture selon la revendication 1 ou 3, caractérisée en ce que les angles du cadre sont arrondis (15)

5. Garniture selon la revendication 1, caractérisée en ce qu'au droit des soufflets transversaux, les pieds (7, 8, 9) de fixation de la garniture sont munis de fentes (17, 18) transversales pour autoriser un jeu longitudinal.

6. Garniture selon la revendication 1 ou 2, caractérisée en ce que lorsque les panneaux sont de mêmes dimensions, la garniture est en forme de prisme.

7. Garniture selon la revendication 1, caractérisée en ce que lorsque l'un des panneaux est plus petit que l'autre, la garniture est en forme de tronc de pyramide.

8. Garniture selon la revendication 1, caractérisée en ce qu'elle comporte au moins un pied de fixation (7 ou 8) destiné à être inséré dans une gorge correspondante disposée sur la face extérieure du panneau intérieur (5) et un pied de fixation destiné à être inséré latéralement dans une gorge solidaire du panneau extérieur (4).

9. Garniture selon l'une des revendications précédentes, caractérisée en ce que le profil transversal du profilé extrudé présente des ondulations (13-14) régulièrement réparties entre les deux bords de la garniture fixés chacun sur un panneau (4 ou 5).

10. Garniture d'étanchéité en matériau thermoplastique pour assurer l'isolation de l'espace entre deux panneaux (4, 5) transparents parallèles indépendants, se présentant sous la forme d'un cadre ayant sensiblement les dimensions des panneaux (4, 5) et une largeur sensiblement égale à la distance entre les deux panneaux, les deux bords de la garniture (6) étant fixés respectivement sur l'un et l'autre des panneaux (4, 5), caractérisée en ce que le cadre est constitué de brins de profilé extrudé et d'angles moulés, chaque angle étant un angle moulé équipé de soufflets transversaux et étant collé à deux brins de profilé extrudé constituant les profilés du cadre.

## Patentansprüche

1. Dichtung aus elastischem Material, wie beispielsweise Gummi, oder thermoplastischem Material, zur Abdichtung des Raums zwischen zwei durchsichtigen, parallelen, unabhängigen Platten (4, 5) in Form eines Rahmens, der im wesentlichen die Abmaße der Platten (4, 5) und eine Breite im wesentlichen gleich der Distanz zwischen den beiden Platten aufweist, wobei die beiden Ränder der Dichtung (6) jeweils auf der einen und der anderen Platte (4, 5) befestigt sind, dadurch gekennzeichnet, daß der Rahmen aus Stücken aus extrudiertem Profilmaterial und gegossenen Winkelstücken aufgebaut ist, wobei jedes Winkelstück durch Einspritzen von elastischem Material in eine Form hergestellt ist, um die Verbindung mit den beiden Profilstücken durch Vulkanisation sicherzustellen, wobei diese Verbindung unter Zwischenschaltung von mindestens einem quer verlaufenden Faltenbalg (16) mit einer oder mehreren Falten dergestalt bewirkt wird, daß die Aufnahme von Montagespielen in den drei Raumrichtungen: Höhe, Breite und Tiefe sichergestellt ist.

2. Dichtung nach Anspruch 1, dadurch gekennzeichnet, daß die Seiten des Rahmens ein Querschnittsprofil in Falten aufweisen.

3. Dichtung nach Anspruch 2, dadurch gekennzeichnet, daß die Winkelstücke des Rahmens das gleiche Querschnittsprofil in Falten aufweisen, wie die Stücke aus extrudiertem Profilmaterial, die die Seiten des Rahmens bilden.

4. Dichtung nach Anspruch 1 oder 3, dadurch gekennzeichnet, daß die Winkelstücke des Rahmens abgerundet (15) sind.

5. Dichtung nach Anspruch 1, dadurch gekennzeichnet, daß an der Stelle der quer verlaufenden Faltenbälge die Befestigungsfüße (7, 8, 9) der Dichtung mit quer verlaufenden Schlitzen (17, 18) versehen sind, um ein Längsspiel zu ermöglichen.

6. Dichtung nach Anspruch 1 oder 2, dadurch gekennzeichnet, daß, sofern die Platten die gleichen Abmaße aufweisen, die Dichtung die Form eines Prismas besitzt.

7. Dichtung nach Anspruch 1, dadurch gekennzeichnet, daß, sofern eine der Platten kleiner ist als die andere, die Dichtung die Form eines Pyramidenstumpfs besitzt.

8. Dichtung nach Anspruch 1, dadurch gekennzeichnet, daß sie zumindest einen Befestigungsfuß (7 oder 8) umfaßt, der dazu dient, in eine entsprechende Rille eingesetzt zu werden, die auf der äußeren Oberfläche der inneren Platte (5) und einen Befestigungsfuß, der dazu bestimmt ist, seitlich in eine mit der äußeren Platte (4) verbundene Rille eingesetzt zu werden.

9. Dichtung nach einem der vorhergehenden Ansprüche, dadurch gekennzeichnet, daß das Querschrittsprofil des extrudierten Profilmaterials Wellen (13, 14) aufweist, die gleichmäßig verteilt sind zwischen den beiden Rändern der Dichtung, die jeweils an einer Platte (4 oder 5) befestigt sind.

10. Dichtung aus thermoplastischem Material zur Abdichtung des Raums zwischen zwei transparenten, parallelen, unabhängigen Platten (4, 5), die die Form eines Rahmens mit im wesentlichen den Abmaßen der Platten (4, 5) und eine Breite im wesentlichen gleich dem Abstand zwischen den beiden Platten aufweist, wobei die beiden Ränder der Dichtung (6) jeweils auf der einen und der anderen Platte (4, 5) befestigt sind, dadurch gekennzeichnet, daß der Rahmen aus Stücken aus extrudiertem Profilmaterial und gegossenen Winkerlstücken aufgebaut ist, wobei jede Ecke ein Winkelstück aufweist, welches mit quer verlaufenden Faltenbälgen versehen ist und an zwei Stücke aus extrudiertem Profilmaterial angeklebt ist, welche die Profile des Rahmens bilden.

## Claims

1. A hermetic gasket made of elastomeric material such as rubber or thermoplastic for isolating the space between two transparent, parallel, independent panels (4, 5), in the form of a frame having substantially the dimensions of the panels (4, 5) and a width substantially equal to the distance between the two panels, the two edges of the gasket (6) being fixed respectively to one and the other of the panels (4, 5), characterised in that the frame is formed of pieces of extruded profile section, and of moulded corners, each corner being produced by injecting the elastomeric material into a mould to ensure continuity by vulcanisation with the two pieces of profile section, this continuity being achieved with the interposition of at least one transverse bellows (16) with one or more folds, so as to ensure the taking-up of the assembly plays in the three dimensions: height, width and depth.

2. A gasket according to Claim 1, characterised in that the sides of the frame have a transverse profile with a folded section.

3. A gasket according to Claim 2, characterised in that the corners of the frame have the same transverse profile with a folded section as the pieces of extruded profile section of the sides of the frame.

4. A gasket according to Claim 1 or 3, characterised in that the corners of the frame are rounded (15).

5. A gasket according to Claim 1, characterised in that in line with the transverse bellows, the fixing feet (7, 8, 9) of the gasket are provided with transverse slots (17, 18) to permit longitudinal play.

6. A gasket according to Claim 1 or 2, characterised in that when the panels are of the same dimensions, the gasket is in the shape of a prism.

7. A gasket according to Claim 1, characterised in that when one of the panels is smaller than the other, the gasket is in the shape of a truncated pyramid.

8. A gasket according to Claim 1, characterised in that it comprises at least one fixing foot (7 or 8) to be inserted into a corresponding groove located on the outer face of the inner panel (5) and a fixing foot to be inserted laterally into a groove integral with the outer panel (4).

9. A gasket according to one of the preceding Claims, characterised in that the transverse profile of the extruded profile section has undulations (13-14) distributed regularly between the two edges of the gasket each fixed to a panel (4 or 5).

10. A hermetic gasket made of thermoplastic material for isolating the space between two transparent, parallel, independent panels (4, 5), in the form of a frame having substantially the dimensions of the panels (4, 5) and a width substantially equal to the distance between the two panels, the two edges of the gasket (6) being fixed respectively to one and the other of the panels (4, 5), characterised in that the frame is formed of pieces of extruded profile section, and of moulded corners, each corner being a moulded corner provided with transverse bellows and being glued to two pieces of extruded profile section forming the profile sections of the frame.
